(19) **Europäisches Patentamt**

**European Patent Office**

**Office européen des brevets**

(11) Veröffentlichungsnummer: **0 297 322 B1**

(12) # EUROPÄISCHE PATENTSCHRIFT

(45) Veröffentlichungstag der Patentschrift:
20.03.91 Patentblatt 91/12

(51) Int. Cl.⁵: **B21B 31/07**

(21) Anmeldenummer: **88109191.2**

(22) Anmeldetag: **09.06.88**

(54) **Dichtungsvorrichtung für Walzenlager in Dressiergerüsten.**

(30) Priorität: **27.06.87 DE 3721265**

(43) Veröffentlichungstag der Anmeldung:
**04.01.89 Patentblatt 89/01**

(45) Bekanntmachung des Hinweises auf die
Patenterteilung:
**20.03.91 Patentblatt 91/12**

(84) Benannte Vertragsstaaten:
**AT BE CH DE ES FR GB GR IT LI LU NL SE**

(56) Entgegenhaltungen:
**DE-A- 2 350 723**
**DE-A- 2 731 313**
**DE-B- 1 908 374**
**US-A- 4 455 856**

(73) Patentinhaber: **SMS SCHLOEMANN-SIEMAG
AKTIENGESELLSCHAFT**
**Eduard-Schloemann-Strasse 4**
**W-4000 Düsseldorf 1 (DE)**

(72) Erfinder: **Benfer, Ernst-Oskar**
**Sieg-Lahn-Strasse 14**
**W-5928 Bad Laasphe (DE)**
Erfinder: **Irle, Rolf Gerd**
**Wiesenstrasse 1**
**W-5912 Hilchenbach (DE)**

(74) Vertreter: **Müller, Gerd et al**
**Patentanwälte**
**HEMMERICH-MÜLLER-GROSSE-POLLMEIER-MEY**
**Hammerstrasse 2**
**W-5900 Siegen 1 (DE)**

EP 0 297 322 B1

## Beschreibung

Die Erfindung betrifft eine Dichtungsvorrichtung für Walzenlager in Dressiergerüsten, bei denen der Walzenzapfen einen konischen Abschnitt zwischen der Walzenstirnfläche und dem mit einer Zapfenbuchse bestückten, in einer Lagerbuchse im Lagergehäuse gelagerten Bereich des Walzenzapfens aufweist, mit einem einstückigen, ringförmigen, flexiblen, mittels eines Drahtseil-Ringes und ggf. eines Stahlbandes bewehrten Dichtungskörper, der auf den konischen Abschnitt aufgeschoben ist und mit Ringdichtungsansätzen an diesem anliegt, und der mit dem äußeren Ringende mindestens einer von zwei in axialem Abstand angeordneten radialen, elastischen Ringrippen mit elastischem Reibungskontakt an mindestens eine gehäusefeste bzw. gehäusedeckelfeste,, seitlich des Ringbunds angeordnete ringförmige Dichtfläche anlegbar ist.

Durch die DE-PS 27 31 313 ist eine Dichtungsvorrichtung für Dressiergerüste bekanntgeworden, bei der die walzenseitige Ringrippe bis annähernd auf den Ringansatz des feststehenden Ringkörpers reicht. Eine Ölabflußbohrung ist in gleicher radialer Ebene wie die Ringrippe angeordnet.

Diese lange, sich im Walzbetrieb drehende Ringrippe bewirkt, daß die Ölpartikel, die die lagergehäuseseitige Ringrippe mit deren Ringlippe passieren konnten, nicht zur Ruhe kommen und über die Ölabflußbohrung in einen Ölsumpf abfließen können, sondern daß diese Partikel ständig aufgewirbelt werden. Selbst schon in der Ölabflußbohrung befindliche Partikel werden durch die direkt über der Öffnung rotierende Ringrippe aus der Ölabflußbohrung herausgewirbelt.

Weiterhin besteht die Gefahr, daß Ölpartikel, die an der Wand der Ringrippe durch die Zentrifugalkraft nach außen gedrängt werden, am Ende der Ringrippe entlang deren Mantelfläche weiterwandern und so den Einzugsbereich der Ölleitung verlassen können. Dies Ölpartikel gelangen dann leicht auf den Walzenmantel, wo sie die Qualaität des Walzgutes negativ beeinflussen.

Während des Betriebs können sehr hohe Öltemperaturen auftreten. Bei kochendem Öl steigen Öldämpfe aus dem Ölsumpf auf und gelangen durch die Ölabflußbohrung zur Walze.

Der Erfindung liegt die Aufgabe zugrunde, eine Dichtvorrichtung für Dressiergerüste so auszubilden, daß kein Öl aus dem Lagerbereich der Walze auf deren Walzenmantel gelangen kann.

Diese Aufgabe wird dadurch gelöst, daß die zweite, walzenballenseitige Ringrippe als Ringrippenstummel ausgebildet ist, dessen Umfang Kegelstumpfform aufweist und daß der Ringrippenstummel ringbundseitig eine scharfe Abrißkante aufweist.

Durch diese Ausgestaltung des Dichtungskörpers wird verhindert, daß die Ölpartikel, die die lagerseitige Ringrippe passiert haben, im Labyrinthbereich verwirbelt werden. Die Abrißkante des Ringrippenstummels bewirkt, daß Ölpartikel, die sich am Ringrippenstummel abgelagert haben, durch die Zentrifugalkraft bis zu der Abrißkante wandern, von hier aus jedoch nicht (gegen die Zentrifugalkraft) am Außenumfang des Ringrippenstummels weiterwandern können. Die durch mehrere Ölpartikel an der Abrißkante gebildeten Öltropfen werden, wenn deren Masse groß genug geworden ist, durch die Zentrifugalkraft gegen den Ringansatz des feststehenden Gehäusedeckels geschleudert. Diese fließfähigen, schweren Tropfen können im Gegensatz zu den schwebenden Ölpartikeln nicht mehr zum Walzenmantel gelangen.

Um eine Verwirbelung der Ölpartikel weitestgehend auszuschließen, sollte der Ringrippenstummel derart bemessen sein, daß dessen Spitze teilweise in einen zwischen dem Ringbund, einem Ringansatz und einem Anschluß-Ringbund ausgebildeten Labyrinthbereich eintaucht.

Von Vorteil ist, daß der Abschluß-Ringbund mindestens eine umlaufende Auffangnut aufweist, die im Querschnitt als schräg zur Walzenachse geneigtes Sackloch ausgebildet ist. In dieser Ringnut fangen sich vagabundierende Ölpartikel, bevor sie den Labyrinthbereich verlassen können. Auch hier bilden sich aus mehreren Ölpartikeln kleine Tropfen, die zum Ringansatz hin ablaufen können.

Wichtig ist auch, daß der zwischen dem Ringbund und dem Anschluß-Ringbund vorgesehene Ringansatz eine konisch zur Walzenachse geneigte Oberfläche aufweist, und daß mindestens eine Ölabflußbohrung am tiefsten Punkt des Ringansatzes vorgesehen ist.

Durch dieses Merkmal ist gewährleistet, daß sich die Öltropfen an den tiefsten Stelle des Ringansatzes sammeln und über die Ölabflußbohrung dem Schmierölkreislauf wieder zugeführt werden können.

Von Bedeutung ist auch, daß die Ölabflußbohrungen Gewinde aufweisen, in die Gewindestopfen eindrehbar sind. Durch die Gewindestopfen kann bei kochendem Öl verhindert werden, daß Ölpartikel durch die Ölabflußbohrungen aufsteigen können.

Von großer Wichtigkeit ist bei der Ausgestaltung des Dichtungskörpers, daß der, mit der lagerseitigen Ringrippe einstückig verbundene Dichtungskörperbereich durch einen Drahtseil-Ring bewehrt ist, so daß sich die Ringrippe mit ihrer Ringlippe nicht durch die Zentrifugalkraft verformen kann. Dadurch ist sichergestellt, daß die Ringlippe optimal abdichtet und somit nur sehr wenig Ölpartikel in den Labyrinthbereich gelangen können, von wo sie dann sicher dem Schmiermittelkreislauf zugeführt werden können.

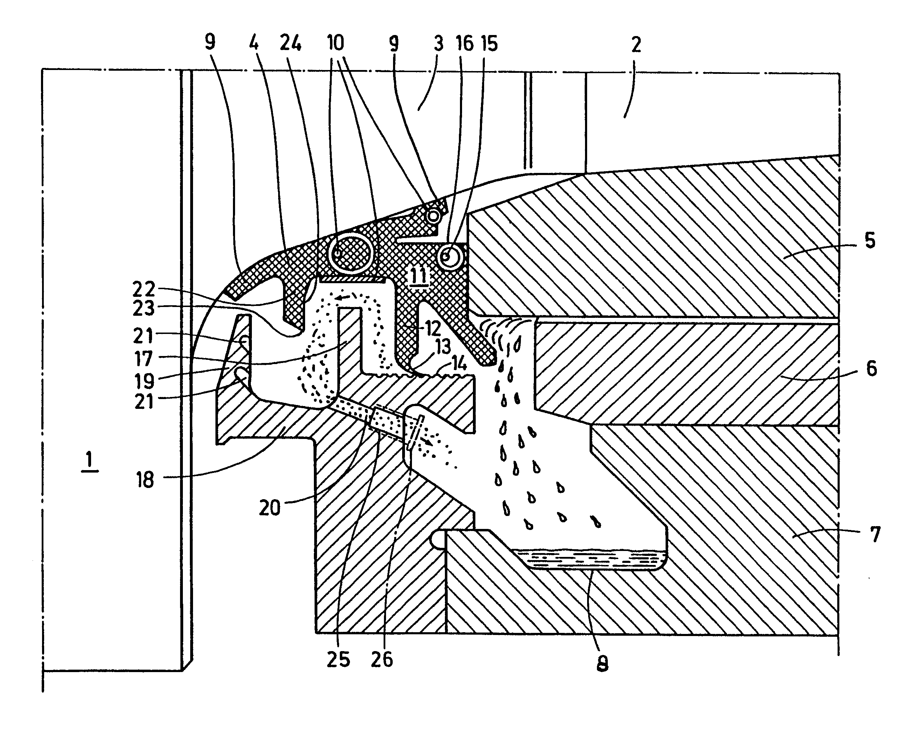

Nachfolgend wird die Erfindung anhand einer Zeichnung näher erläutert. Die Zeichnung zeigt eine Walze 1, deren Walzenzapfen 2 einen konischen Abschnitt 3 aufweist, auf den ein Dichtungskörper 4 aufgeschoben ist. Auf dem Walzenzapfen 2 sitzt eine Zapfenbuchse 5, die in einer Lagerbuchse 6 des Lagergehäuses 7 gelagert ist. Dem Lagerspalt zwischen der -Zapfenbuchse 5 und der Lagerbuchse 6 wird kontinuierlich Öl zugeführt. Das aus dem Lagerspalt austretende Öl wird in einen Ringansatz 8 des Lagergehäuses 7 aufgefangen und zur Wiederaufbereitung weitergeleitet.

Der Dichtungskörper 4 liegt mit seinen Ringdichtungsansätzen 9 fest am konischen Abschnitt 3 an. Bewehrungselemente 10 versteifen den Dichtungskörper 4. Am Dichtungskörperbereich 11 ist eine Ringrippe 12 mit ihrer Ringlippe 13 einstückig angeformt. Die Ringlippe 13 läuft auf einer Dichtfläche 14. Damit die Ringlippe 13 stets mit gleichem Druck an der Dichtungsfläche 14 anliegt, ist im Dichtungskörperbereich 11 ein Drahtseil-Ring 15 mit einer diesen umgebenden Spiralfeder 16 vorgesehen. Eine Verformung des Dichtungskörperbereichs 11 und damit der Ringrippe 12 und der Ringlippe 13 wird durch diese Elemente verhindert. Damit ist stets eine optimale Dichtwirkung im Bereich der Ringlippe 13/Dichtfläche 14 gewährleistet.

Die Dichtfläche 14 schließt zur Walze 1 hin mit einem Ringbund 17 ab. An den Ringbund 17 schließt sich ein Ringansatz 18 und ein Abschluß-Ringbund 19 an. Der Ringansatz 18 ist zur Walze 1 hin konisch verjüngt ausgebildet. An der tiefsten Stelle des Ringbundes 18 weist dieser eine Ölabflußbohrung 20 auf, die zum Ölsumpf des Ringansatzes 8 führt. Die Ölabflußbohrung 20 weist ein Gewinde auf, in das ein Gewindestopfen 26 eindrehbar ist.

Der Abschluß-Ringbund 19 weist zwei umlaufende Auffangnute 21 auf. Die Auffangnute 21 sind im Querschnitt sacklochartig und fallen zum Nutgrund hin in Richtung auf die Walzenachse ab, so daß Öl, das sich in der Auffangnut gesammelt hat, ungehindert zum tiefsten Punkt des Ringansatzes 18 abfließen kann.

Parallel zur Ringrippe 12 ist der Dichtungskörper 4 walzenseitig mit einem Ringrippenstummel 22 versehen. Der Ringrippenstummel 22 weist eine Kegelstumpfform auf. Ringbundseitig besitzt der Ringrippenstummel 22 eine Abrißkante 23, von der, sich an der Seitenfläche 24 des Ringrippenstummels 22 sammelndes Öl, zum Ringansatz 18 abgeschieden wird. Der Ringrippenstummel 22 ist so bemessen, daß er die von der Ringlippe 13 herkommenden Ölpartikel zwar in den Raum zwischen dem Ringbund 17 und dem Abschluß-Ringbund 19 leitet, jedoch die in diesem Raum befindlichen Ölpartikel nicht aufwirbelt.

## Bezugszeichenliste

1      Walzen

2      Walzenzapfen

3      Konischer Abschnitt

4      Dichtungskörper

5      Zapfenbuchse

6      Lagerbuchse

7      Lagergehäuse

8      Ringansatz

9      Ringdichtungsansätze

10      Bewehrungselemente

11      Dichtungskörperbereich

12      Ringrippe

13      Ringlippe

14      Dichtfläche

15      Drahtseil-Ring

16      Spiralfeder

17      Ringbund

18      Ringansatz

19      Abschluß-Ringbund

20      Ölabflußbohrung

21      Auffangnute

22      Ringrippenstummel

23      Abrißkante

24      Seitenfläche

25      Gewinde

26      Gewindestopfen

## Ansprüche

1. Dichtungsvorrichtung für Walzenlager in Dressiergerüsten, bei denen der Walzenzapfen (2) einen konischen Abschnitt (3) zwischen der Walzenstirnfläche und dem mit einer Zapfenbuchse (5) bestückten, in einer Lagerbuchse (6) im Lagergehäuse (7) gelagerten Bereich des Walzenzapfens aufweist, mit einem einstückigen, ringförmigen, flexiblen, mittels eines Drahtseil-ringes (15) und ggf. eines Stahlbandes bewehrten Dichtungskörper, der auf den konischen Abschnitt aufgeschoben ist und ' mit Ringdichtungsansätzen (9) an diesem anliegt, und der mit dem äußeren Ringende mindestens einer von zwei in axialem Abstand angeordneten radialen, elastischen Ringrippen mit (12) elastischem Reibungskontakt an mindestens eine gehäusefeste bzw. gehäusedeckelfeste, seitlich eines Ringbundes (17) angeordnete ringförmige Dichtfläche (14) anlegbar ist, **dadurch gekennzeichnet,** daß die zweite, walzenballenseitige Ringrippe als Ringrippen-Stummel (22) ausgebildet ist, dessen Umfang Kegelstumpfform aufweist und daß der Ringrippenstummel (22) ringbundseitig eine scharfe Abrißkante (23) aufweist.

2. Dichtungsvorrichtung nach Anspruch 1, **dadurch gekennzeichnet,** daß der Ringrippenstummel (22) derart bemessen ist, daß dessen Spitze teilweise in einen, zwischen dem Ringbund (17) einem Ringansatz (18) und einem Abschluß-Ringbund (19) ausgebildeten Labyrinthbereich eintaucht.

3. Dichtungsvorrichtung nach Anspruch 1 oder 2, **dadurch gekennzeichnet,** daß der Abschluß-Ringbund (19) mindestens eine umlaufende Auffangnut (21) aufweist, die im Querschnitt als schräg zur Walzenachse geneigtes Sackloch ausgebildet ist.

4. Dichtungsvorrichtung nach mindestens einem der Ansprüche 1 bis 3, **dadurch gekennzeichnet,** daß der zwischen dem Ringbund (17) und dem Abschluß-Ringbund (19) vorgesehene Ringansatz (18) eine konisch zur Walzenachse geneigte Oberfläche aufweist, und daß mindestens eine Ölabflußbohrung (20) am tiefsten Punkt des Ringansatzes (18) vorgesehen ist.

5. Dichtungsvorrichtung nach Anspruch 4, **dadurch gekennzeichnet,** daß die Ölabflußbohrungen Gewinde aufweisen, in die Gewindestopfen eindrehbar sind.

## Claims

1. Sealing device for roll bearings in skin-pass stands, in which the roll spigot (2) displays a conical portion (3) between the end face of the roll and that region of the roll spigot, which is equipped with a spigot bush (5) and borne in a bearing bush (6) in the bearing housing (7), with an integral annular flexible sealing body, which is armoured by a wire rope ring (15) and in a given case by a steel band, is pushed onto the conical portion and rests against this by ring seal projections (9) and which is layable with elastic frictional contact by the outer annular end of at least one of two radial elastic annular ribs (12), which are arranged at an axial spacing, against at least one annular sealing surface (14), which is fast with the housing or the housing cover and arranged laterally of an annular collar (17), characterised thereby, that the second annular rib on the roll barrel side is constructed as annular rib stub (22), the circumference of which displays frusto-conical shape, and that the annular rib stub (22) displays a sharp tear-off edge (23) on the annular collar side.

2. Sealing device according to claim 1, characterised thereby, that the annular rib stub (22) is dimensioned in such a manner that its tip enters partially into a labyrinth region formed between the annular collar (17), an annular projection (18) and a terminating annular collar (19).

3. Sealing device according to claim 1 or 2, characterised thereby, that the terminating annular collar (19) displays at least one encircling collecting groove (21), which is constructed in cross-section as a blind hole inclined obliquely to the roll axis.

4. Sealing device according to at least one of the claims 1 to 3, characterised thereby, that the annular projection (18), which is provided between the annular collar (17) and the terminating annular collar (19), displays a surface which is conically inclined to the roll axis and that at least one oil outflow bore (20) is provided at the lowest point of the annular projection (18).

5. Sealing device according to claim 4, characterised thereby, that the claim 4, characterised thereby, that the oil outflow bores display threads, into which threaded plugs can be turned.

## Revendications

1. Dispositif d'étanchification de paliers de cylindre dans des cages dresseuses dans lesquelles le tourillon de cylindre (2) comporte un segment conique (3) compris entre la face frontale du cylindre et la zone de tourillon équipée d'une douille (5), logée dans un coussinet (6) du carter de palier (7), comportant un élément d'étanchification annulaire, fexible, d'une pièce, armé d'un câble métallique annulaire (15) et éventuellement d'une bande d'acier, qui est agencé sur le segment conique et repose contre celui-ci par l'intermédiaire de prolongements d'étanchification annulaires (9) et qui est appuyable par l'extrémité annulaire extérieure de l'une au moins de deux nervures annulaires radiales élastiques, agencées à distance axiale contre au moins une surface d'étanchification annulaire (14) solidaire du carter ou du couvercle de carter, agencée latéralement par rapport à une collerette (17) moyennant un contact à friction élastique, caractérisé en ce que la deuxième nervure annulaire, du côté du cylindre se présente comme une nervure annulaire tronquée (22) dont la circonférence affecte la forme d'un tronc de cône et en ce que la nervure annulaire tronquée (22) présente, du côté de la collerette, une arête vive (23).

2. Dispositif d'étanchification selon la revendication 1 caractérisé en ce que la nervure annulaire tronquée (22) est mesurée de manière telle que son sommet pénétre partiellement dans une zone à labyrinthe comprise entre la collerette (17), un appendice (18) et une collerette d'extrémité (19).

3. Dispositif d'étanchification selon la revendication 1 ou 2 caractérisé en ce que la collerette d'extrémité (19) comporte au moins une rainure circonférencielle collectrice (21) dont la section se présente comme un trou borgne incliné par rapport à l'axe du cylindre.

4. Dispositif d'étanchification selon l'une au moins des revendications 1 à 3 caractérisé en ce que l'appendice annulaire (18) prévu entre la collerette (17) et la collerette d'extrémité (19) présente une surface inclinée à la façon d'un cône par rapport à l'axe du cylindre, et en ce qu'au moins un perçage d'écoulement d'huile (20) est prévu au point le plus bas de l'appendice annulaire (18).

5. Dispositif d'étanchification selon la revendication 4 caractérisé en ce que les perçages d'écoulement d'huile comportent des filets dans lesquels sont introduits des bouchons filetés

2  3 16 15  9  10  4 24  9

5  6  7

8

11  12 13 14

26  25

20

22 23 21 17 19 21  18

1

5